# EUROPEAN PATENT APPLICATION

(11) **EP 4 585 991 A1**
(43) Date of publication of application: **16.07.2025**
(21) Application number: 24151421.5
(22) Date of filing: 11.01.2024
(51) Int. Cl.: G02B 27/01, G02B 30/24, G02B 30/34, G02B 30/40

(54) **DISPLAY APPARATUS**

(71) Applicant: TriLite Technologies GmbH, 1040 Wien (AT)
(72) Inventor: NOUI, Louahab, Upper Hartfield, TN7 4AS (GB); REITTERER, Joerg, 2345 Brunn am Gebirge (AT)
(74) Representative: Weiser Voith Gugler Patentanwälte Partnerschaft

(57) **Abstract**

A display apparatus comprises a support (8), a light source (9) configured to emit a first light beam (18) carrying a first image (2) and a second light beam (19) carrying a second image (4), a mirror assembly (10) with one or two cascaded mirrors (22) configured to oscillate about two axes (23, 24) in order to scan the first light beam across a first scanning area (20) and the second light beam across a second scanning area (21), a first beam deflection element (11) supported by the support (8), arranged in the first scanning area (20) and configured to deflect the scanned first light beam (18) towards the first eye (3) of the user, and a second beam deflection element (12) supported by the support (8), arranged in the second scanning area (21) and configured to deflect the scanned second light beam (19) towards the second eye (4) of the user.

## Description

The present invention relates to a display apparatus for displaying a first image to a first eye and a second image to a second eye of a user.

Display apparatus of this kind are commonly used for displaying images, in particular stereo images, in virtual reality (VR) or augmented reality (AR) glasses, helmets or head-up displays (HUDs) for a broad range of applications like navigation, training, entertainment, education or work. In case of light beam scanning (LBS) display apparatus two separate projection modules are mounted on opposite sides of the display apparatus, e.g., each at one of the temples of a spectacle frame for displaying the respective image to each eye of the user. Each projection module has a light source, a mirror assembly and a beam deflection element (often called "combiner"). The light source of each projection module emits a single- or multi-coloured light beam onto the mirror assembly of that projection module, the light beam carrying the respective image. The mirror assembly of each projection module has, e.g., one micro-electromechanical-system (MEMS) mirror oscillating about two axes or two cascaded MEMS mirrors each oscillating about one axis, to reflect the respective light beam into subsequent directions, i.e. angles, one direction/angle per pixel of the respective image, towards the combiner of that projection module. The combiner of each projection module, e.g., a reflective or holographic mirror, a reflective or transmissive holographic optical element, a waveguide or the like, in turn, projects the respective image towards the eye of the user, in AR applications superposed by light of the surrounding.

For stereoscopic display, the images carried by the light beams of the two projection modules are different views of a common scene such that each displayed point of this scene is projected by the light beams under different angles towards the user's eyes to provide depth information. For non-stereoscopic display, the images carried by the light beams are either the same and each pixel of the same is projected by the two light beams under the same angles towards the user's eyes, or the two images are separate parts of a larger image, each part being projected by one of the two light beams only.

In current display apparatus, however, the mounting and calibration of the two projection modules on the opposite sides of the apparatus is time-consuming and expensive. Moreover, each of the projection modules requires its separate installation space and power for simultaneous operation.

It is an object of the present invention to provide an improved display apparatus which is compact and allows to display images to both eyes of a user with lower power consumption.

This object is achieved with a display apparatus which comprises
a support;
a light source supported by the support and configured to emit a first light beam carrying a first image and a second light beam carrying a second image;
a mirror assembly supported by the support with one or two cascaded mirrors configured to oscillate about two axes in order to scan the first light beam across a first scanning area and the second light beam across a second scanning area;
a first beam deflection element supported by the support, arranged in the first scanning area and configured to deflect the scanned first light beam towards the first eye of the user; and
a second beam deflection element supported by the support, arranged in the second scanning area and configured to deflect the scanned second light beam towards the second eye of the user.

The display apparatus of the invention utilises one and the same mirror assembly for scanning both the first light beam carrying the first image towards the first beam deflection element as well as the second light beam carrying the second image towards the second beam deflection element. Hence, a scanning range of the single mirror assembly - sometimes called field of view (FOV) of the mirror assembly - covers a first scanning area for the first light beam and the first image, on the one hand, and a second scanning area for the second light beam and the second image, on the other hand.

Utilising one single mirror assembly instead of two requires less mounting and calibration, only half the power for driving the mirror oscillation and half the installation space for the mirror/s, the mirror driver, the wiring, etc. Due to the lower power consumption, the display apparatus may, when battery powered, operate for a longer time without re-charging or use a smaller battery further reducing the required installation space.

The first and second beam deflection elements ("combiners") may be embodied in many ways, e.g., each as one of a reflective or holographic mirror, a reflective or transmissive holographic optical element, or the like. In a preferable embodiment, the first beam deflection element is formed by a first waveguide having
an in-coupling section arranged in the first scanning area and configured to couple said scanned first light beam into the first waveguide for guiding therethrough, and
an out-coupling section configured to couple the guided first light beam out of the first waveguide towards the first eye of the user; and
the second beam deflection element is formed by a second waveguide having
an in-coupling section arranged in the second scanning area and configured to couple said scanned second light beam into the second waveguide for guiding therethrough, and
an out-coupling section configured to couple the guided second light beam out of the second waveguide towards the second eye of the user.

Employing waveguides as combiners downstream the mirror assembly allows to guide the light beams in front of the eyes inside a flat waveguide structure and, hence, to place the mirror assembly at a small distance from the waveguides for coupling a wide scanning area into tiny in-coupling sections, which yields a particularly compact design.

Hence, the combination of the single mirror assembly scanning both light beams and the downstream waveguide combiners allows for a display apparatus that is particularly compact and displays a respective image to each eye of a user with low power consumption.

In a beneficial embodiment, the support comprises a spectacle frame or spectacles glasses and the mirror assembly is supported at a nose-bridge thereof. Thereby, installation space that is available at the nose-bridge is used advantageously. Moreover, this configuration results in a symmetrical design of the display apparatus with a central mirror assembly and the beam deflection elements symmetrically to the left and right thereof, which is easy to calibrate and control. Furthermore, supporting the mirror assembly at the centre instead of, e.g., at a temple, shifts its weight and size to a spot that is vertically and symmetrically supported and well balanced by the nose without inducing any torque on the spectacle frame or glasses.

In another beneficial embodiment, the support comprises a visor or helmet and the mirror assembly is supported at a centre thereof to achieve a space saving and well balanced symmetrical design of the display apparatus.

In these beneficial embodiments, it is advantageous when also the light source is supported at the nose-bridge or centre. In this way, the light source is supported in the vicinity of the mirror assembly making the display apparatus even more compact and avoiding a more complex guidance of the light beams from the light source to the central mirror assembly.

Alternatively or in addition thereto, in case of waveguide combiners, the in-coupling sections of the first and second waveguides may advantageously be supported at the nose-bridge or centre, such that the in-coupling sections are compactly arranged close to the mirror assembly, which allows to couple a wide scanning range of the mirror assembly into the waveguides. Hence, each of the first and second light beams may be displayed under a wide range of angles such that each of the first and second images covers a wide FOV of the user.

The two waveguides are typically supported next to or in front of the eyes which may be done in many ways.

In one beneficial embodiment, the first and second waveguides are arranged inside or on one common substrate, preferably one glass plate. The common substrate allows for an easy manufacturing of the waveguides thereon or therein with an intrinsic mutual alignment of the waveguides and, thus, of the first and second light beams and images.

In another beneficial embodiment, the first and second waveguides are arranged inside or on separate substrates, preferably glass plates, which substrates are non-coplanarily tilted towards the user's eyes. Employing two separate substrates for mounting the waveguides facilitates the tilting of the waveguides towards the user's eyes, i.e., following the shape of the user's face. The tilting of the waveguides allows to angularly shift the out-coupled light beams towards one another, for instance, to couple them out towards the eyes under angles of overlapping ranges to overlap the first and second images, e.g., to display a stereo image to the user.

The first and second light beams are reflected by the mirror assembly under different angles and/or positions, i.e., onto horizontally and/or vertically offset first and second scanning areas. To this end, the first and second light beams may be emitted in many ways.

In a first advantageous embodiment, the light source comprises one emitter configured to emit the first and second light beams coaxially and at different emission times. Thereby, the scanning range of the mirror assembly is partitioned in a time-duplexed manner such that, during one part of a mirror oscillation period, the light beam emitted by the one emitter is reflected as the first light beam towards the first beam deflection element, e.g., towards the in-coupling section of the first waveguide; and, during another part of the mirror oscillation period, the light beam emitted by the one emitter is reflected as the second light beam towards the second beam deflection element, e.g., towards the in-coupling section of the second waveguide. Hence, the two images are displayed using one and the same single emitter, which results in a particularly low power consumption and easy calibration of the display device.

In a second advantageous embodiment, the light source comprises two emitters supported under different orientations and configured to emit the first and second light beams. By positioning and/or directing the first and second emitters differently with respect to the mirror assembly the scanning range of the mirror assembly is enlarged.

In a first variant of this embodiment, each emitter emits both of the first and second light beams in said time-duplexed manner during a first and second part, respectively, of the mirror oscillation period. Thereby, both emitters project - each in combination with the mirror assembly - at least a part of the first image onto the first scanning area and at least a part of the second image onto the second scanning area. These parts may coincide to increase pixel refresh rate or be separate to increase image pixel resolution.

In a second variant of this embodiment, each emitter may emit only a respective one of the first and second light beams. Thereby, each emitter projects - in combination with the mirror assembly - only one of the first and second images separately, the first emitter the first image onto the first scanning area and the second emitter the second image onto the second scanning area. In this variant, the first and second light beams may be scanned by the mirror assembly over twice the scanning range of a single scanned light beam, thus, doubling the perceivable size of the images.

In each variant of this embodiment, the two emitters may be configured to emit simultaneously to achieve a particularly high pixel intensity, pixel refresh rate or frame rate, or to simultaneously display the first and second images.

In some embodiments the first and second images may be displayed by single-coloured first and second light beams. For multi-coloured display, the light source is configured to emit each light beam with more than one colour, preferably the colours red, green and blue ("RGB"). To this end, the abovementioned emitter/s may, e.g., each emit an RGB light beam.

The first and second images may be displayed to the user under different deflection angles (in case of waveguide combiners: "out-coupling angles") and, thus, be perceived without any overlap by the user, e.g., side by side or on top of each other. In a preferred embodiment, however, the deflection angles of the first and second light beams have an overlapping range to superpose the first and second images. To this end, the display apparatus comprises an angular shift element configured to shift the first light beam and/or the second light beam in angle for deflecting them towards the eyes under angles of overlapping ranges. This may be utilised for stereo display when the two light beams carry images that are different views of a common scene, or for mono display at a higher intensity, frame rate or pixel refresh rate within the overlapping ranges of the deflection angles.

Three beneficial variants of this embodiment which may optionally be combined shall now be described.

In the first beneficial variant, which utilises waveguide combiners, the in-coupling and out-coupling sections of the first waveguide each comprise a diffraction grating for coupling in or out the first light beam, the diffraction gratings having different spatial frequencies to form at least a part of said angular shift element, and/or the in-coupling and out-coupling sections of the second waveguide each comprise a diffraction grating for coupling in or out the second light beam, the diffraction gratings having different spatial frequencies to form at least a part of said angular shift element. Diffraction gratings are small in size and easy to manufacture. Hence, the angular shift can be applied in a very compact manner. Moreover, this variant allows to couple the light beams via the diffraction gratings at the in-coupling sections into the waveguides at shallow angles for efficient guiding, in particular by means of total internal reflection, and to apply the desired angular shift via the diffraction gratings at the out-coupling sections after the efficient guiding.

In the second beneficial variant, the angular shift element comprises a refractive optical element, preferably a prism, supported by the support in a light path of the first and/or second light beam between the mirror assembly and the first and second beam deflection elements. A refractive optical element is a simple, yet efficient means to apply the angular shift. Placing the refractive optical element between the mirror assembly and the beam deflection elements utilises the available installation space and results in a compact display apparatus.

In the third beneficial variant, the angular shift element comprises a reflective optical element, supported by the support in a light path of the first and/or second light beam between the mirror assembly and the first and second beam deflection elements, preferably a V-shaped element reflecting the first and second light beams at inner surfaces of different legs of the V. Similar to the refractive element, a reflective optical element is a simple, yet efficient means to apply the angular shift and its positioning results in a compact display apparatus. Moreover, shifting the angle of the first and/or second light beam by means of reflection does not introduce any chromatic aberration in case of a multi-colour light source and, hence, facilitates the calibration of the display apparatus.

The concept of utilising the scanning range of the single mirror assembly for displaying several images to the user's eyes may advantageously be extended to more than two images. To this end, the light source may be further configured to emit a third light beam carrying a third image, the mirror assembly may be further configured to scan the third light beam across a third scanning area, and the display apparatus may further comprise a third beam deflection element supported by the support, arranged in the third scanning area and configured to deflect the scanned third light beam towards the first or the second eye of the user. In this way, an array of more than two beam deflection elements, which may be arranged horizontally and/or vertically offset from one another, may be supplied with images to deflect the same towards the user's eyes.

The invention will now be described by means of exemplary embodiments thereof with reference to the enclosed drawings, in which show:
Fig. 1 an embodiment of a display apparatus according to the present invention, in a schematic top view;
Fig. 2 a partition of the display apparatus of Fig. 1, in a schematic back view;
Fig. 3 a first embodiment of a light source of the display apparatus of Figs. 1 and 2, in a perspective view from behind;
Fig. 4 a second embodiment of the light source of the display apparatus of Figs. 1 and 2, in a perspective view from behind; and
Figs. 5 to 7 three variants of an optional angular shift element of the display apparatus of Figs. 1 and 2, each in a schematic diagram.

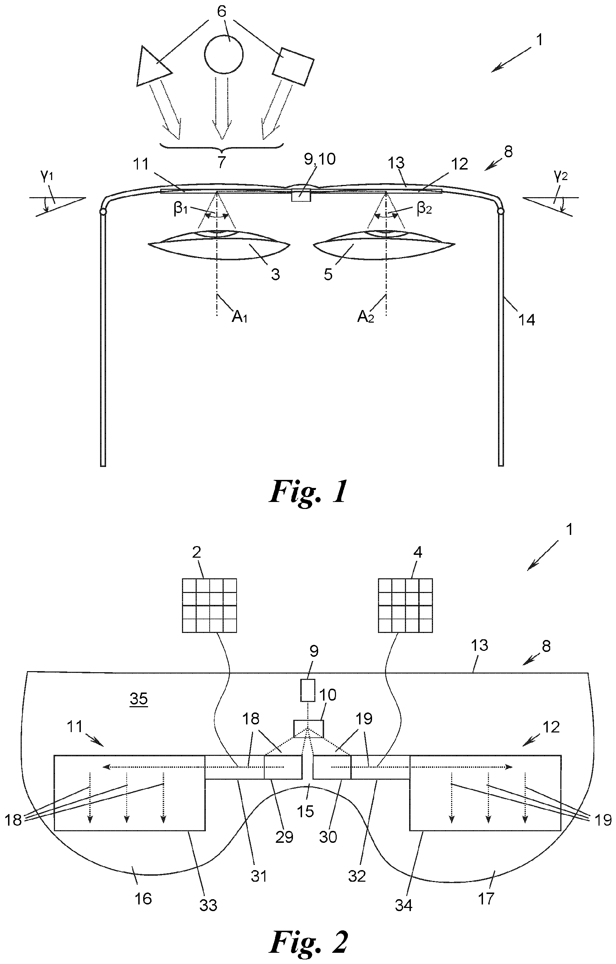

Figs. 1 and 2 show a display apparatus 1 displaying a first image 2 to a first (here: left) eye 3 and a second image 4 to a second (here: right) eye 5 of a user. The images 2, 4 can be monochromatic or coloured, stationary images or images of a video sequence. The display apparatus 1 can be any display, e.g., a head-up display for a vehicle, an AR or VR helmet or smart glasses to be worn by a user, a handheld device such as a smartphone or the like, or a part thereof.

In the exemplary AR application shown in Fig. 1, the images 2, 4 augment a surrounding 6 such as a landscape, an urban environment, a road, a classroom, a workplace etc. so that the user perceives additional information, e.g., for navigation, work, education, training or entertainment as an overlay ("AR image") of a light field 7 ("view") of the surrounding 6.

The display apparatus 1 has a support 8 which supports a light source 9, a mirror assembly 10, a first beam deflection element (here: a first waveguide 11) and a second beam deflection element (here: a second waveguide 12) for displaying the images 2, 4 to the user's eyes 3, 5. In the embodiment shown in Figs. 1 and 2, the support 8 is formed by spectacle glasses 13 held in a spectacle frame 14 and supports the light source 9 and the mirror assembly 10 in or on a nose bridge 15 of the spectacle glasses 13. The support 8 also supports each of the first and second waveguides 11, 12 at a respective eye glass 16, 17. Alternatively, the light source 9 and/or the mirror assembly 10 may be supported at a different location, e.g., at one side of the spectacle glasses 13, at temples of the spectacle frame 14, etc. In other exemplary embodiments the support 8 comprises a visor or a helmet which supports the mirror assembly 10 and/or the light source 9 at its centre, i.e., in a position corresponding to the horizontal centre - albeit at an arbitrary vertical height - of the support 8.

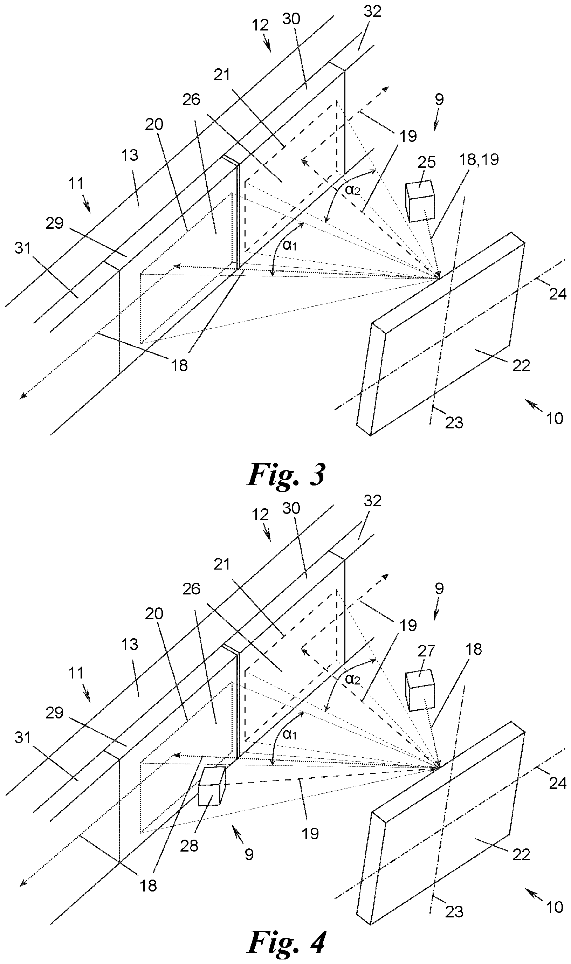

As shown in Figs. 3 and 4, the light source 9 emits a first light beam 18 which carries the first image 2 and a second light beam 19 which carries the second image 4 onto the mirror assembly 10. The mirror assembly 10, in turn, reflects the light beams 18, 19 to scan the first light beam 18 across a first scanning area 20 (dotted lines) and the second light beam 19 across a second scanning area 21 (dashed lines), one scanning angle per pixel of the images 2, 4.

For two-dimensionally scanning the light beams 18, 19 over the respective scanning area 20, 21, the mirror assembly 10 has either one mirror 22 which oscillates about two axes 23, 24 (Figs. 3 and 4) or two mirrors (not shown) which are arranged one after the other in a beam path of the first and second light beams 18, 19, i.e. in a cascade, each of which oscillates about a different axis or about two axes. The mirror assembly 10 may reflect the first and second light beams 18, 19, e.g., according to a raster pattern row-by-row and line-by-line, according to a spiral or Lissajous pattern, etc. To this end, each scanning mirror may, e.g., be a galvo mirror, a MEMS mirror or the like.

Each light beam 18, 19 carries its image 2, 4 in a time-multiplexed manner, i.e., the pixels of its image 2, 4 at different emission times one after the other. Hence, to display each pixel under the desired scanning angle, i.e., mirror orientation, the light beam emission of the light source 9 and the oscillation of the mirror assembly 10 are synchronised.

In the embodiment of Fig. 3, the light source 9 comprises a single emitter 25 which emits the first and second light beams 18, 19 coaxially but at different emission times, i.e., in a time-duplexed manner. When the mirror 22 is directed at the first waveguide 11, i.e., at the dotted first scanning area 20, the light beam emitted by the emitter 25 is the first light beam 18 (dotted line). When the mirror 22 is directed at the second waveguide 12, i.e., at the dashed second scanning area 21, the light beam emitted by the emitter 25 is the second light beam 19 (dashed line). Hence, a scanning range (also called "field of view", FOV) 26 of the mirror assembly 10 covers the first scanning area 20 scanned within a scanning angle range α₁ by the first light beam 18 and the second scanning area 21 scanned within a scanning angle range α₂ by the second light beam 19.

In the embodiment of Fig. 4, the light source 9 comprises two emitters 27, 28 which are supported under different orientations, i.e., positions and/or directions, with respect to the mirror 22 and which emit the first and second light beams 18, 19 either simultaneously or alternately onto the mirror 22.

In one variant of the embodiment (shown in Fig. 4) each of the two emitters 27, 28 emits only a respective one of the first and second light beams 18, 19. Thus, the first emitter 27 - in combination with the mirror 22 - projects the first image 2 onto the first scanning area 20 and the second emitter 28 - in combination with the mirror 22 - projects the second image 4 onto the second scanning area 21. Alternatively to the crossing projection shown in Fig. 4, where the right emitter 27 projects the first image 2 onto the left scanning area 20 and the left emitter 28 projects the second image 4 onto the right scanning area 21, the emitters 27, 28 may project in parallel, the right emitter 27 projecting the second image 4 onto the right scanning area 21 and the left emitter 28 projecting the first image 2 onto the left scanning area 20.

In another variant of this embodiment (not shown), each of the two emitters 27, 28 emits both the first and second light beams 18, 19 in the abovementioned time-duplexed manner, the first light beam 18 during a respective first part and the second light beam 19 during a respective second part of the mirror oscillation period. Thereby, the areas scanned by the respective first and second emitter 27, 28 - each in combination with the mirror 22 - may overlap, e.g., to increase the pixel refresh rate (when the light beams 18, 19 project the same pixels) or pixel resolution (when the light beams 18, 19 project different pixels, e.g., spatially alternating).

The emitters 25, 27, 28 can be of any type known in the art configured to emit a light beam, e.g., a semiconductor emitter such as a light emitting diode (LED), microLED (pLED), superluminescent light emitting diode (SLED), or laser diode, for instance an edge-emitting laser diode or surface-emitting laser diode. For colour images 2, 4, the light source 9 may be a polychromatic light source. Therefor, each emitter 25, 27, 28 may comprise a set of laser diodes of, e.g., three primary colours, for instance red, green and blue, which emit the light beams 18, 19 comprised of three different wavelengths for colour perception.

As shown in Figs. 2 to 4 the first and second waveguides 11, 12 receive their respective scanned, i.e. reflected, light beam 18, 19 from the mirror assembly 10 for guiding and displaying the same to the respective eye 3, 5 of the user. To this end, each waveguide 11, 12 has an in-coupling section 29, 30, a guiding section 31, 32 and an out-coupling section 33, 34.

The in-coupling section 29 of the first waveguide 11 is arranged in the first scanning area 20 (here: at the nose-bridge 15) to receive the first light beam 18 from the mirror assembly 10 and couples the same into the first waveguide 11. The guiding section 31 of the first waveguide 11 guides the first light beam 18 (in Fig. 2: to the right) to the out-coupling section 33 which couples the same out of the first waveguide 11 towards the first eye 3 of the user under first out-coupling angles spanning a range β₁ measured with respect to an eye axis A₁ of the first eye 3 (Fig. 1).

Similarly, the in-coupling section 30 of the second waveguide 12 is arranged in the second scanning area 21 (here: also at the nose-bridge 15) to receive the second light beam 19 from the mirror assembly 10 and couples the same into the second waveguide 12. The guiding section 32 of the second waveguide 12 guides the second light beam 19 (in Fig. 2: to the left) to the out-coupling section 34 which couples the same out of the second waveguide 12 towards the second eye 5 of the user under second out-coupling angles spanning a range β₂ measured with respect to an eye axis A₂ of the second eye 5 (Fig. 1). The user, hence, perceives the images 2, 4 under both out-coupling angle ranges β₁, β₂ which, hence, span the user's perceived FOV.

For coupling in or coupling out the respective light beam 18, 19, the first and second waveguides 11, 12 may comprise any known coupling element, e.g., one or a multitude of successive mirrors, a prism, a fiber, a diffraction grating, a holographic element, etc. or a combination thereof. To focus or defocus the light beams 18, 19, e.g., to shift the object plane of the images 2, 4 closer to the user's eyes 3, 5, the out-coupling sections 33, 34 may optionally have a curvature or comprise additional optics such as push or pull lenses. To expand the exit pupil, the first and second waveguides 11, 12 may optionally be so-called exit pupil expansion (EPE) waveguides. Moreover, to combine the first and second images 2, 4 with the surrounding light 7 in AR applications, the out-coupling sections 33, 34 of the first and second waveguides 11, 12 may be semi-transparent in some embodiments.

The first and second waveguides 11, 12 may be supported in many ways. In the example of Fig. 2, the first and second waveguides 11, 12 are arranged inside one common glass plate 35 forming a substrate. In an alternative embodiment, the first waveguide 11 is arranged on or inside one substrate and the second waveguide 12 is arranged on or inside another substrate. These two substrates may either be coplanar or tilted towards the user's eyes 3, 5, e.g., a left substrate for the first waveguide 11 by a tilting angle γ₁ and a right substrate for the second waveguide 12 by a tilting angle γ₂ as indicated in Fig. 1. By tilting ("bending") the substrates, the out-coupled first and second light beams 18, 19 are shifted in angle, i.e., the resulting out-coupling angles and their ranges β₁, β₂ are rotated in space with respect to the eye axes A₁, A₂, and the light beams 18, 19 are optionally coupled out towards the first and second eyes 3, 5 under overlapping out-coupling angle ranges β₁, β₂ to superpose the first and second images 2, 4 in the user's perception.

Alternatively to the waveguides 11, 12 shown, other beam deflection elements may be arranged in the scanning areas 20, 21 and deflect or guide the deflected light beams 18, 19 to the user's eyes 3, 5. For instance, the first and second beam deflection elements (often called "combiners") may each be embodied as a reflective or holographic mirror, in particular a freeform or freespace combiner, a reflective or transmissive holographic optical element, or the like.

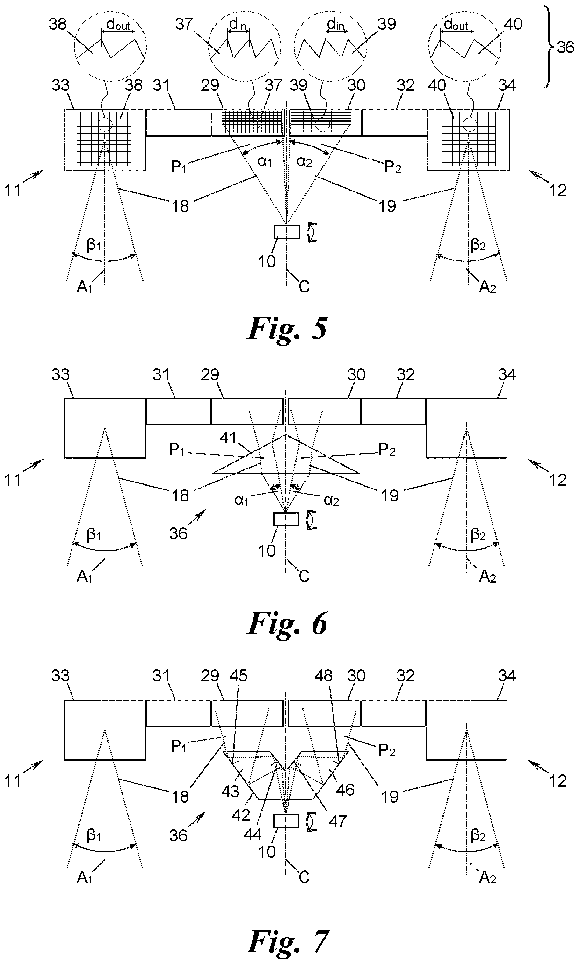

Figs. 5 to 7 illustrate an embodiment of the display apparatus 1 comprising an optional angular shift element 36 for superposing the first and second images 2, 4. The angular shift element 36 shifts the first light beam 18 and/or the second light beam 19 in angle, i.e., the resulting out-coupling angles spanning the range β₁ and/or the resulting out-coupling angles spanning the range β₂, to finally couple out the first and second light beams 18, 19 towards the eyes 3, 5 under overlapping out-coupling angle ranges β₁, β₂ each measured with respect to the respective eye axis A₁, A₂.

In the example of Fig. 5 to 7, the first light beam 18 is coupled into the first waveguide 11 under the scanning angle range α₁ with respect to a central axis C parallel to the eye axes A₁, A₂. After being angularly shifted by the angular shift element 36, the first light beam 18 is coupled out under the out-coupling angle range β₁ ranging from -15° to +15° with respect to the eye axis A₁. The second light beam 19 is coupled into the second waveguide 12 under the scanning angle range α₂ with respect to the central axis C and, after being angularly shifted by the angular shift element 36, coupled out under the out-coupling angle range β₂ ranging from -15° to +15° with respect to the eye axis A₂, i.e. under the same out-coupling angle range as the first light beam 18, i.e., β₂ = β₁ = [-15°, 15°] .

By coupling out the first and second light beams 18, 19 under overlapping out-coupling angle ranges β₁, β₂, the images 2, 4 are perceived by the user in a superposed manner within the overlap of the out-coupling angle ranges β₁, β₂. This may optionally be utilised for stereo display when the images 2, 4 are different views of a common scene. For non-stereo display both images 2, 4 may be the same view of the scene.

The angular shift element 36 may be any optical element that angularly shifts (and optionally stretches or compresses) at least one of the light beams 18, 19 to make the resulting out-coupling angle ranges β₁, β₂ partially or fully overlap. The angular shift element 36 may be placed at various locations in a light path P₁ of the first light beam 18 and/or in a light path P₂ of the second light beam 19. Three exemplary variants of an angular shift element 36 which may optionally be combined are shown in Figs. 5 to 7.

In the variant of Fig. 5, the angular shift element 36 is formed by diffraction gratings 37 - 40: The in-coupling section 29 of the first waveguide 11 comprises a first in-coupling diffraction grating 37 for coupling in the first light beam 18 and the out-coupling section 33 of the first waveguide 11 comprises a first out-coupling diffraction grating 38 for coupling out the first light beam 18. The first in-coupling diffraction grating 37 and the first out-coupling diffraction grating 38 have different spatial frequencies, i.e., the distances dᵢₙ, dₒᵤₜ between grating structures, the line densities, etc. of the gratings 37 and 38 differ, which shifts the range α₁ of in-coupled scanning angles (here: ranging from -30.1° to -0.1° with respect to the central axis C) in angle to a different range β₁ of out-coupling angles (here: ranging from -15° to 15° with respect to the eye axis A₁). Likewise, the in-coupling section 30 of the second waveguide 12 comprises a second in-coupling diffraction grating 39 for coupling in the second light beam 19 and the out-coupling section 34 of the second waveguide 12 comprises a second out-coupling diffraction grating 40 for coupling out the second light beam 19. The spatial frequencies of the second in-coupling and out-coupling diffraction gratings 39, 40 differ to shift the range α₂ of in-coupled scanning angle (here: ranging from 0.1° to 30.1° with respect to the central axis C) in angle to a different range β₂ of out-coupling angles (here: ranging from -15° to 15° with respect to the eye axis A₂).

To apply the angular shift the diffraction gratings 37 - 40 may be any diffraction gratings known in the art such as blazed, sinusoidal, binary, and/or holographic gratings, etc.; the diffraction gratings 37 - 40 may be of transmission or reflection type.

In the variant of Fig. 6, the angular shift element 36 is formed by a refractive element, here: a prism 41, that is supported between the mirror assembly 10 and the first waveguide 11 in the light path P₁ of the first light beam 18 and between the mirror assembly 10 and the second waveguide 12 in the light path P₂ of the second light beam 19. The prism 41 refracts and thereby angularly shifts the first light beam 18 clockwise and the second light beam 19 anti-clockwise such that they are coupled out under out-coupling angles of equal ranges β₁, β₂ as explained above with respect to the example of Fig. 5.

In the variant of Fig. 7, the angular shift element 36 is formed by a reflective element, here: a V-shaped element 42, that is supported between the mirror assembly 10 and the first waveguide 11 in the light path P₁ of the first light beam 18 and between the mirror assembly 10 and the second waveguide 12 in the light path P₂ of the second light beam 19. The V-shaped element 42 has a first leg 43, which reflects and thereby angularly shifts the first light beam 18 at its inner surfaces 44 and 45, and a second leg 46, which reflects and thereby angularly shifts the second light beam 19 at its inner surfaces 47 and 48, such that the first and second light beams 18, 19 are coupled out under out-coupling angles of equal ranges β₁, β₂ as explained above with respect to the example of Fig. 5. The V-shaped element 42 may be integrally formed, e.g., monolithic, or be composed of individual mirror elements.

While Figs. 5 to 7 depict variants that symmetrically display the images 2, 4 with respect to the centre of the eyes 3, 5, i.e., straight in front of the user, the images 2, 4 may alternatively be displayed asymmetrically to the centre of the eyes 3, 5, e.g., to the left of the user when the out-coupling angle ranges β₁, β₂ are to the left of the respective eye axis A₁, A₂. Moreover, instead of the symmetrical placement of the angular shift element 36 in both light paths P₁ and P₂, the angular shift element 36 may alternatively be placed asymmetrically, for instance by omitting the diffraction gratings 39, 40, the right half of the prism 41, or the right leg 46 of V-shaped element 42 in the variants of Figs. 5 to 7.

Furthermore, instead of the exemplary horizontally offset in-coupling sections 29, 30, the two in-coupling sections 29, 30 may alternatively or additionally be vertically offset. In this case, the angular shift element 36 may apply, e.g., an angular shift to overlap the out-coupling angle ranges β₁, β₂ of the first and second light beams 18, 19 vertically, as detailed above for the horizontal overlap.

The concept of partitioning the FOV of one single mirror assembly 10 to display several images to the user is not restricted to displaying two images but may be employed to display three, four, five or more images. For instance, in an embodiment displaying three images, the light source 9 may emit a third light beam carrying a third image. The mirror assembly 10 may scan the third light beam across a third scanning area within the scanning range of the mirror assembly 10. A third beam deflection element which is supported by the support 8 and arranged in the third scanning area may deflect the scanned third light beam towards the first or the second eye 3 of the user to display the same as detailed above. Hence, any number of beam deflection elements may be supported, e.g., in form of a one- or two-dimensional array, on the support 8 within the scanning range of the mirror assembly 10.

The invention is not restricted to the specific embodiments disclosed herein, but encompasses all variants, modifications and combinations thereof that fall within the scope of the appended claims.

## Claims

1. Display apparatus for displaying a first image (2) to a first eye (3) and a second image (4) to a second eye (5) of a user, comprising:
a support (8);
a light source (9) supported by the support (8) and configured to emit a first light beam (18) carrying said first image (2) and a second light beam (19) carrying said second image (4) ;
a mirror assembly (10) supported by the support (8) with one or two cascaded mirrors (22) configured to oscillate about two axes (23, 24) in order to scan the first light beam (18) across a first scanning area (20) and the second light beam (19) across a second scanning area (21);
a first beam deflection element (11) supported by the support (8), arranged in the first scanning area (20) and configured to deflect the scanned first light beam (18) towards the first eye (3) of the user; and
a second beam deflection element (12) supported by the support (8), arranged in the second scanning area (21) and configured to deflect the scanned second light beam (19) towards the second eye (4) of the user.

2. Display apparatus according to claim 1, wherein the first beam deflection element is formed by a first waveguide (11) having
an in-coupling section (29) arranged in the first scanning area (20) and configured to couple said scanned first light beam (18) into the first waveguide (11) for guiding therethrough, and
an out-coupling section (33) configured to couple the guided first light beam (18) out of the first waveguide (11) towards the first eye (3) of the user; and
the second beam deflection element is formed by a second waveguide (12) having
an in-coupling section (30) arranged in the second scanning area (21) and configured to couple said scanned second light beam (19) into the second waveguide (12) for guiding therethrough, and
an out-coupling section (34) configured to couple the guided second light beam (19) out of the second waveguide (12) towards the second eye (5) of the user.

3. Display apparatus according to claim 1 or 2, wherein the support (8) comprises a spectacle frame (14) or spectacles glasses (13) and the mirror assembly (10) is supported at a nose-bridge (15) thereof.

4. Display apparatus according to claim 1 or 2, wherein the support (8) comprises a visor or helmet and the mirror assembly (10) is supported at a centre thereof.

5. Display apparatus according to claim 3 or 4, wherein the light source (9) is supported at the nose-bridge (15) or centre.

6. Display apparatus according to claim 2 in combination with any one of claims 3 to 5, wherein the in-coupling sections (29, 30) of the first and second waveguides (11, 12) are supported at the nose-bridge (15) or centre.

7. Display apparatus according to claim 2 in combination with any one of claims 3 to 6, wherein the first and second waveguides (11, 12) are arranged inside or on one common substrate, preferably one glass plate (35).

8. Display apparatus according to claim 2 in combination with any one of claims 3 to 6, wherein the first and second waveguides (11, 12) are arranged inside or on separate substrates, preferably glass plates, which substrates are non-coplanarily tilted towards the user's eyes.

9. Display apparatus according to any one of claims 1 to 8, wherein the light source (9) comprises one emitter (25) configured to emit the first and second light beams (18, 19) coaxially and at different emission times.

10. Display apparatus according to any one of claims 1 to 8, wherein the light source (9) comprises two emitters (27, 28) supported under different orientations and configured to emit the first and second light beams (18, 19).

11. Display apparatus according to claim 10, wherein the two emitters (27, 28) are configured to emit simultaneously.

12. Display apparatus according to any one of claims 1 to 11, wherein the light source (9) is configured to emit each light beam (18, 19) with more than one colour, preferably the colours red, green and blue.

13. Display apparatus according to any one of claims 1 to 12, further comprising an angular shift element (36) configured to shift the first light beam (18) and/or the second light beam (19) in angle for deflecting them towards the eyes under angles of overlapping ranges (β₁, β₂).

14. Display apparatus according to claims 2 and 13, wherein the in-coupling and out-coupling sections (29, 33) of the first waveguide (11) each comprise a diffraction grating (37, 38) for coupling in or out the first light beam (18), the diffraction gratings (37, 38) having different spatial frequencies to form at least a part of said angular shift element (36), and/or
wherein the in-coupling and out-coupling sections (30, 34) of the second waveguide (12) each comprise a diffraction grating (39, 40) for coupling in or out the second light beam (19), the diffraction gratings (39, 40) having different spatial frequencies to form at least a part of said angular shift element (36) .

15. Display apparatus according to claim 13 or 14, wherein the angular shift element (36) comprises a refractive optical element, preferably a prism (41), supported by the support (8) in a light path (P₁, P₂) of the first and/or second light beam (18, 19) between the mirror assembly (10) and the first and second beam deflection elements (11, 12).

16. Display apparatus according to any one of claims 13 to 15, wherein the angular shift element comprises a reflective optical element, supported by the support (8) in a light path (P₁, P₂) of the first and/or second light beam (18, 19) between the mirror assembly (10) and the first and second beam deflection elements (11, 12), preferably a V-shaped element (42) reflecting the first and second light beams (18, 19) at inner surfaces (44, 45, 46, 47) of different legs (43, 46) of the V.

17. Display apparatus according to any one of claims 1 to 16, wherein the light source (9) is further configured to emit a third light beam carrying a third image, the mirror assembly (10) is further configured to scan the third light beam across a third scanning area, and the display apparatus (1) further comprises a third beam deflection element supported by the support (8), arranged in the third scanning area and configured to deflect the scanned third light beam towards the first or the second eye (3) of the user.

## Amended claims

### Amended claims in accordance with Rule 137(2) EPC.

1. Display apparatus for displaying a first image (2) to a first eye (3) and a second image (4) to a second eye (5) of a user, comprising:
a support (8);
a light source (9) supported by the support (8) and configured to emit a first light beam (18) carrying said first image (2) and a second light beam (19) carrying said second image (4);
a mirror assembly (10) supported by the support (8) with one or two cascaded mirrors (22) configured to oscillate about two axes (23, 24) in order to scan the first light beam (18) across a first scanning area (20) and the second light beam (19) across a second scanning area (21);
a first beam deflection element (11) supported by the support (8), arranged in the first scanning area (20) and configured to deflect the scanned first light beam (18) towards the first eye (3) of the user; and
a second beam deflection element (12) supported by the support (8), arranged in the second scanning area (21) and configured to deflect the scanned second light beam (19) towards the second eye (4) of the user; **characterised by**
an angular shift element (36) configured to shift the first light beam (18) and/or the second light beam (19) in angle for deflecting them towards the eyes under angles of overlapping ranges (β₁, β₂), wherein
either:
the first beam deflection element is formed by a first waveguide (11) having an in-coupling section (29) arranged in the first scanning area (20) and configured to couple said scanned first light beam (18) into the first waveguide (11) for guiding therethrough, and an out-coupling section (33) configured to couple the guided first light beam (18) out of the first waveguide (11) towards the first eye (3) of the user, and
the second beam deflection element is formed by a second waveguide (12) having an in-coupling section (30) arranged in the second scanning area (21) and configured to couple said scanned second light beam (19) into the second waveguide (12) for guiding therethrough, and an out-coupling section (34) configured to couple the guided second light beam (19) out of the second waveguide (12) towards the second eye (5) of the user,
wherein the in-coupling and out-coupling sections (29, 33) of the first waveguide (11) each comprise a diffraction grating (37, 38) for coupling in or out the first light beam (18), the diffraction gratings (37, 38) having different spatial frequencies to form at least a part of said angular shift element (36), and/or the in-coupling and out-coupling sections (30, 34) of the second waveguide (12) each comprise a diffraction grating (39, 40) for coupling in or out the second light beam (19), the diffraction gratings (39, 40) having different spatial frequencies to form at least a part of said angular shift element (36);
or:
the angular shift element comprises a reflective optical element, supported by the support (8) in a light path (P₁, P₂) of the first and/or second light beam (18, 19) between the mirror assembly (10) and the first and second beam deflection elements (11, 12), preferably a V-shaped element (42) reflecting the first and second light beams (18, 19) at inner surfaces (44, 45, 46, 47) of different legs (43, 46) of the V.

2. Display apparatus according to claim 1, wherein the support (8) comprises a spectacle frame (14) or spectacles glasses (13) and the mirror assembly (10) is supported at a nose-bridge (15) thereof.

3. Display apparatus according to claim 1, wherein the support (8) comprises a visor or helmet and the mirror assembly (10) is supported at a centre thereof.

4. Display apparatus according to claim 2 or 3, wherein the light source (9) is supported at the nose-bridge (15) or centre.

5. Display apparatus according to any one of claims 2 to 4, wherein the in-coupling sections (29, 30) of the first and second waveguides (11, 12) are supported at the nose-bridge (15) or centre.

6. Display apparatus according to any one of claims 2 to 5, wherein the first and second waveguides (11, 12) are arranged inside or on one common substrate, preferably one glass plate (35).

7. Display apparatus according to any one of claims 2 to 5, wherein the first and second waveguides (11, 12) are arranged inside or on separate substrates, preferably glass plates, which substrates are non-coplanarily tilted towards the user's eyes.

8. Display apparatus according to any one of claims 1 to 7, wherein the light source (9) comprises one emitter (25) configured to emit the first and second light beams (18, 19) coaxially and at different emission times.

9. Display apparatus according to any one of claims 1 to 7, wherein the light source (9) comprises two emitters (27, 28) supported under different orientations and configured to emit the first and second light beams (18, 19).

10. Display apparatus according to claim 9, wherein the two emitters (27, 28) are configured to emit simultaneously.

11. Display apparatus according to any one of claims 1 to 10, wherein the light source (9) is configured to emit each light beam (18, 19) with more than one colour, preferably the colours red, green and blue.

12. Display apparatus according to any one of claims 1 to 11, wherein the light source (9) is further configured to emit a third light beam carrying a third image, the mirror assembly (10) is further configured to scan the third light beam across a third scanning area, and the display apparatus (1) further comprises a third beam deflection element supported by the support (8), arranged in the third scanning area and configured to deflect the scanned third light beam towards the first or the second eye (3) of the user.
